# EUROPEAN PATENT APPLICATION

(11) **EP 4 675 147 A1**
(43) Date of publication of application: **07.01.2026**
(21) Application number: 25184456.9
(22) Date of filing: 23.06.2025
(51) Int. Cl.: F16L 55/115, F16L 37/23

(54) **CLOSING DEVICE FOR QUICK-RELEASE COUPLINGS**

(30) Priority: 25.06.2024 IT 202400014521
(71) Applicant: FASTER S.r.l., 26027 Rivolta d'Adda (CR) (IT)
(72) Inventor: SORBI, Roberto, Rivolta d'Adda (CR) (IT); DANELLI, Alessandro, Rivolta d'Adda (CR) (IT)
(74) Representative: Bianchetti & Minoja with Trevisan & Cuonzo IPS SRL

(57) **Abstract**

The present invention concerns a closing device (1) for quick-release couplings (20, 30) for fluids under pressure, in particular for female couplings (20) of the push-pull type, the coupling being provided with an axially movable outer connecting ring nut (23) and with a ring of connecting spheres (22), movable in the radial direction, for connection with a male coupling (30). The device according to the present invention comprises a main body (10) intended to be associated with the outer body of said female coupling (20) at its connection opening (21) and further comprises at least one closing element (11) movable between an opening position and a closing position of the connection opening (21) of the female coupling (20), characterized in that said closing device (1) further comprises actuation means (12, 13) suitable for selectively actuating in translation said connection/disconnection ring nut (23) of said female coupling when said closing element (11) is in said opening position.

## Description

### FIELD OF THE INVENTION

The present invention concerns an improved closing device for quick-release couplings for fluids under pressure, in particular for quick-release couplings of the *push-pull* type, which allows the collection of dirty oil and at the same time implements a functionality designed to facilitate the mutual connection manoeuvre of the male coupling in the female coupling, reducing the effort on the part of the user.

### STATE OF THE ART

As is known, from the current state of the art, in the quick-release couplings for fluids under pressure considered here, the fluid-dynamic connection takes place by inserting the male coupling inside the ring of spheres present in the female coupling, until direct contact is made between the ends of the axial valve bodies of the two couplings. In fact, said axial valve bodies are, as is known, able to close the axial passage of the fluid by preventing the passage of the fluid itself when the male and female couplings are not connected.

Some push-pull couplings of the type known from the state of the art are provided, in particular in general on the female coupling, with a micro-valve to relieve any residual pressure present in the coupling itself, and facilitate the connection with an ergonomically acceptable effort for the user.

This feature significantly contributes to the ease of use and practicality of the *push-pull* couplings, allowing a quick and reliable connection even under difficult operating conditions and where there are high residual pressures.

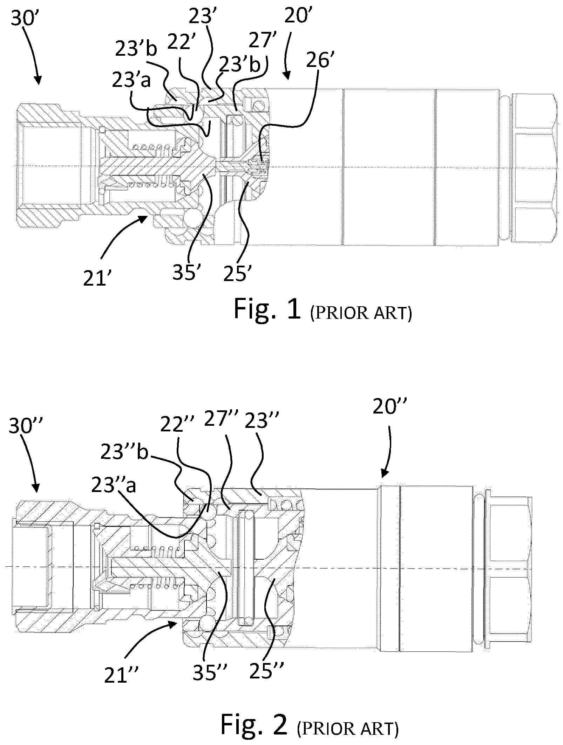

Currently, the state of the art provides that for the ½"-coupling, the male part can enter the female part without interference inside the ring of spheres until direct contact between the ends of the axial valve bodies, according to what is visible in Figure 1, so as to require a not too high effort that is ergonomically sustainable by the operator.

For ¾ inch-couplings, on the other hand, the ISO 7241 standard that guarantees their interchangeability envisages dimensions of the components that entail a considerable increase in the effort required in the coupling operation compared to the ½"-version that currently represents, as mentioned, the market standard for this type of *push-pull-*couplings*.*

More in particular, again with reference to ¾ -inch couplings, the state of the art provides that during the connection step the male coupling comes into contact with the spheres of the female part before the ends of the axial valve bodies of the male coupling and the female coupling respectively come into contact with each other, as shown in Figure 2.

Pushing on the spheres with the tip of the male coupling according to the ISO 7241 standard as is the case with ¾-couplings of known type involves an inefficient push, and an increase in the effort that the operator must make to connect the male coupling to the female coupling. Furthermore, this makes the implementation of the micro-valve in the female coupling unnecessary, since the ends of the axial valve bodies of the male and female couplings do not come into direct contact with each other until all the inner components of the female coupling are displaced by the pushing action of the male on the female.

It is evident that, in the presence of residual pressures in the female coupling, the connection becomes particularly difficult, if not impossible.

### SUMMARY OF THE INVENTION

In light of the above, the task of the present invention is to realise a closing device for a female coupling that overcomes the limits of the prior art allowing to facilitate the connection of the *push-pull* couplings, in particular the ¾-inch couplings, reducing the necessary effort and improving operational efficiency.

More specifically, the object of the present invention is to realise a closing device capable of collecting the dirty oil that can escape from the female coupling during the connection and disconnection operations.

A further object of the invention is to realise a closing device that facilitates the coupling capacity by reducing the effort that the operator must make to make the connection.

Advantageously, the closing device according to the invention can be configured as an openable closure cap for the female coupling.

The above task, as well as the mentioned purposes and others that will better appear later, are achieved by an improved closing device for quick-release couplings for fluids under pressure according to claim 1.

Other features are provided in the dependent claims.

### LIST OF FIGURES

Further characteristics and advantages will become clearer from the following exemplary but non-limiting description of a preferred embodiment of the present invention which will be given below with the aid of the attached drawings in which:
- Figure 1 is a partially sectional view of a ½"-quick-release coupling of known type showing a connection step in which the ends of the axial valve bodies contact each other;
- Figure 2 is a partially sectional view of a ¾"-quick-release coupling of known type showing a connection step in which the ends of the axial valve bodies do not contact each other due to the interference of the male coupling with the spheres of the female coupling;

- Figure 3 is a perspective view illustrating a ¾"-female coupling of the *push-pull* type comprising a closing device according to the present invention, and wherein the openable door is in the closing position;
- Figure 4 illustrates the same view as Figure 3 in which the closing device is sectioned with a longitudinal vertical plane;
- Figure 5 shows a section with a transverse vertical plane of the closing device according to the present invention assembled on a *push-pull* coupling according to Figure 3;
- Figures 6A and 6B show respectively in perspective view and in section with a transverse vertical plane the closing device according to the present invention;
- Figure 7 illustrates a different perspective view of a ¾"-female coupling of the *push pull* type comprising a closing device according to the present invention, in partial section according to a longitudinal transverse plane and in which the openable door is in the closing position;
- Figure 8 is a sectional side view with a longitudinal vertical plane of the ¾''-female coupling of the *push pull* type comprising a closing device according to the present invention of Figure 7;
- Figure 9 is a perspective assembly view of a ¾" -female coupling of the *push pull* type comprising a closing device according to the present invention in an assembly view in which the openable door is in an opening position;
- Figure 10 illustrates a sectional side view with a longitudinal vertical plane of the coupling of Figure 9;
- Figure 11 illustrates the same sectional view as Figure 10 in a first step of connection of the male coupling within the female coupling;
- Figure 12 illustrates a perspective view of a first connection step of Figure 11;
- Figure 13 illustrates the same sectional view as Figure 10 in a second step of connection of the male coupling within the female coupling;
- Figure 14 illustrates the same sectional view as Figure 10 in a step of complete connection of the male coupling within the female coupling;
- Figure 15 illustrates the same sectional view as Figure 10 in a step of partial disconnection of the male coupling from the female coupling.

### DETAILED DESCRIPTION OF THE INVENTION

In the attached figures, the closing device according to the present invention for quick-release couplings for fluids under pressure, in particular for quick-release couplings of the *push-pull* type, is indicated globally with the reference number **1.**

In the quick-release couplings for fluids under pressure of the *push-pull* type known from the state of the art, illustrated in Figures 1 and 2, the fluid-dynamic connection is made by coupling a male coupling **30', 30"** which is inserted inside the front connection opening **21', 21"** of a female coupling **20', 20",** which in turn comprises, always according to what is known from the state of the art, at least one radially movable ring of spheres **22', 22"** suitable for retaining the end of the male coupling.

Examples of quick-release couplings of known type are described in patents EP 4 001 727 A2 and IT MI20 120 058 A1 in the name of the same present Applicant, and from US patent application US 2 145 212 A.

In the *push-pull* couplings of the type considered here, the female coupling **20', 20"** is provided with a connection/disconnection ring nut **23', 23"** which is fixed with respect to the body of the coupling, while the sphere body **27', 27"** translates due to the thrust or traction exerted by the male **30', 30"** which, thanks to the connection or disconnection movement operated by the user, displaces the connection spheres **22', 22"** facing towards the inside of the front connection opening **21', 21"** of the female coupling **20', 20**"from the rest position shown in Figure 1, to an operating position in which the spheres are housed, in their radial movement, in one of the seats **23'b, 23"b** formed on the inner shaped profile of the ring nut **23', 23"** suitable for receiving the spheres **22', 22"** when they displace radially outwards pushed by the coupling male following the insertion of the male into the female.

The movement in radial direction of said connecting spheres **22', 22"** is prevented or allowed by the ring nut **23', 23",** depending on the mutual position of the sphere body **27', 27"** with respect to the ring nut itself.

With particular reference to Figures 1 and 2, said fixed ring nut **23', 23"** has towards the inside of the coupling a shaped profile comprising at least one protrusion **23' a, 23"a** which, when the sphere body **27', 27"** is in a rest position in which also the spheres **22', 22"** are in the rest position, keeps the connecting spheres in their rest configuration radially protruding towards the inside of the coupling so that, upon coupling of the male, said spheres stably retain the male coupling **30', 30"** which cannot be disconnected from the female.

The complete coupling of the male coupling **30', 30"** with the female coupling **20', 20"** entails the direct contact between the ends of the axial valve bodies, indicated respectively with the reference numbers **25', 25"** for the valve body of the female coupling **20'**, **20"** and with **35', 35"** for the valve body of the male coupling **30', 30"**.

The axial valve bodies **25', 25"**and **35', 35"** close the fluid passage when the male **30', 30"** and female **20', 20"** couplings are not connected. Some *push-pull* couplings of known type are provided with a micro-valve **26',** in general coaxial to the axial valve body **25'** of the female coupling, to relieve the residual pressure and facilitate the connection of the male in the female.

Figure 1 illustrates a ½"-coupling, and in particular it shows how the male coupling **30'** can enter the female coupling **20'** without interference inside the ring of spheres **22'** until direct contact between the ends of the axial valve bodies **25', 35',** so as to require a not too high effort that is ergonomically sustainable by the operator.

Figure 2 instead shows a step of the connection of a ¾"-coupling, and shows how the male coupling **30"** comes into contact with the spheres **22"** of the female coupling **20"** before the ends of the axial valve bodies **25", 35"** respectively of the female coupling and of the male coupling come into contact with each other. This entails a considerable increase in the effort required in the coupling operation compared to the ½"-version that currently represents the market standard for this type of *push-pull* couplings.

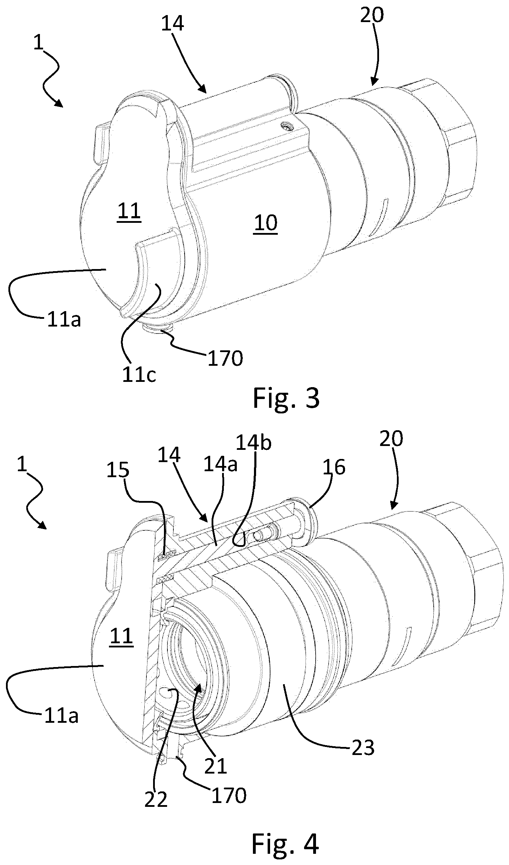

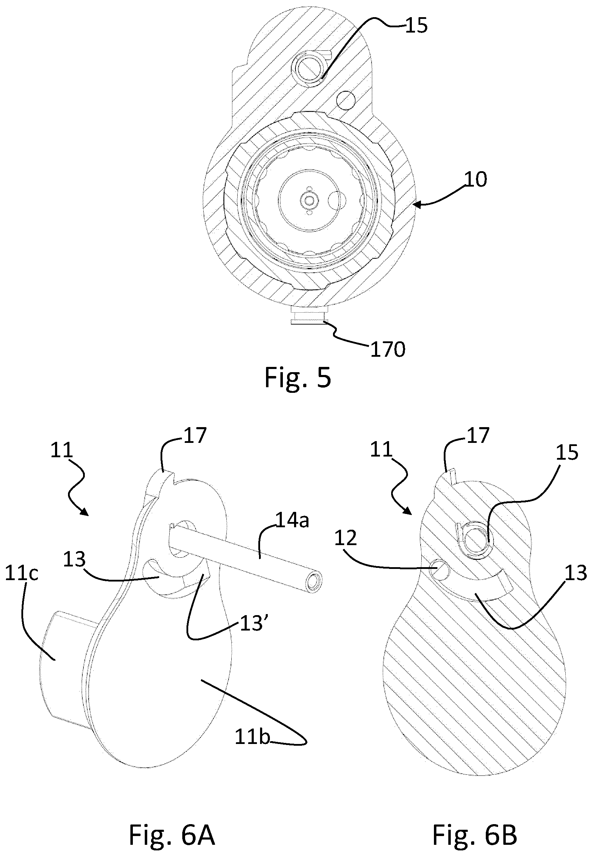

In order to solve this problem, the closing device **1** for quick-release couplings according to the present invention illustrated by way of example in Figures 3 to 15, facilitates the mutual connection manoeuvre of the male coupling **30** in the female coupling **20,** reducing the effort required of the user.

Advantageously, the closing device **1** according to the present invention also allows the collection of leaked dirty oil during connection/disconnection manoeuvres, and for this purpose a fitting **170** is advantageously provided for connection to suitable leaked dirty oil collection systems.

With particular reference to Figures 3 et seq., the closing device **1** according to the present invention comprises a main body **10** associated with the outer body of the female coupling **20** at the connection opening **21** that receives the male coupling **30.** Said connection **170** for tapping dirty oil is advantageously formed at said main body **10,** according to what is visible for example in Figures 3 and 4.

The closing device **1** according to the invention further comprises, associated with said main body **10,** a closing element **11** movable between a closing position and an opening position. When the closing device **1** is associated with a female coupling 20, in the closing position the closing element **11** closes the connection opening **21** of the female coupling **20,** while in the opening position it leaves free access to the connection opening **21.**

More in particular, the closing element **11** comprises hinging means **14** for rotationally movable connection with the main body **10** of the device.

The main body **10** is in turn advantageously connected directly to the connection end of the female coupling **20,** as visible for example in the attached Figures 3, 9 and 12 which show assembly views of the device associated with a female coupling.

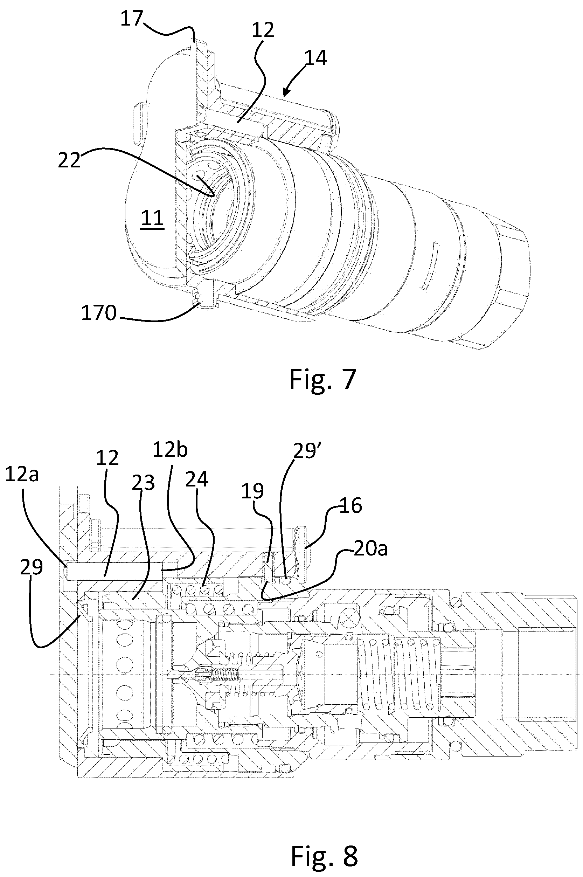

Preferably, the main body **10** of the device **1** according to the present invention is made integral with the female coupling **20** by means of a coupling that allows the possibility of radially orienting the closing device **1** with respect to the female coupling **20,** and this can for example preferably be obtained through one or more threaded grub screws **19** associated with said main body **10** and which are received in as many receiving grooves **20a** provided on the coupling **20,** so that the orientation of the closing device with respect to the coupling can take place simply by loosening said grub screws **19** and by closing said grub screws **19** after repositioning the main body of the device with respect to the coupling so that the grub screws **19** are inserted into the groove **20.** Reference is for example to the sectional views of Figures 8, 10, 13, 14 and 15.

Said closing element **11** therefore acts, by displacing between a closing position and an opening position, as a closing cap of the connection opening **21** of the female coupling **20,** preventing the entry of dirt when it is closed and allowing the insertion of the male coupling **30** when it is open.

According to the preferred embodiment of the present invention shown in the attached Figures, said hinging means preferably comprise at least one cylindrical connecting element **14a** rotatably connected to said closing element **11** and suitable for being inserted into a corresponding receiving opening **14b** formed in said main body **10** of said closing device **1.** Elastic means **15** advantageously act between said cylindrical connecting element **14a** and said closing element **11,** in turn stably connectable to said main body **10,** so as to keep said closing element **11** in said first closing position and to oppose a movement of said closing element **11** towards the opening position.

More preferably, the elastic means acting between said cylindrical connecting element **14a** and said closing element **11** comprise a torsional spring **15.**

With particular reference to Figure 4, the closing device **1** according to the present invention further comprises fixing means **16** suitable for retaining the cylindrical connecting element **14a** within the receiving opening **14b** formed in the main body **10.**

Advantageously, the closing element **11** comprises an outer face **11a,** which is turned outwards when said device **1** is associated with the female coupling **20,** and an inner face **11b,** which is facing towards the female coupling **20** when the device **1** is assembled on the coupling, with said cylindrical connecting element **14a** rotatably connected to said closing element **11** which projects from said inner face **11b.**

Advantageously, a grasping element **11c** protrudes from said outer face **11a,** visible for example in Figure 3, which facilitates the grasping and movement of the closing element **11** by the user.

The closing device **1** further comprises actuation means **12, 13** suitable for allowing the selective actuation of the connection/disconnection ring nut **23** of the female coupling **20** when, after the closing device **1** has been assembled on the coupling **20,** the closing element **11** is in the opening position. Said connection/disconnection ring nut **23** of the female coupling **20** is translatable with respect to the body of the coupling, as will be described below.

Said actuation means include, formed on said closing element **11,** more in particular on said inner face **11b** of said closing element **11,** a shaped guide groove **13** comprising, at one of its ends, an inclined plane **13'.**

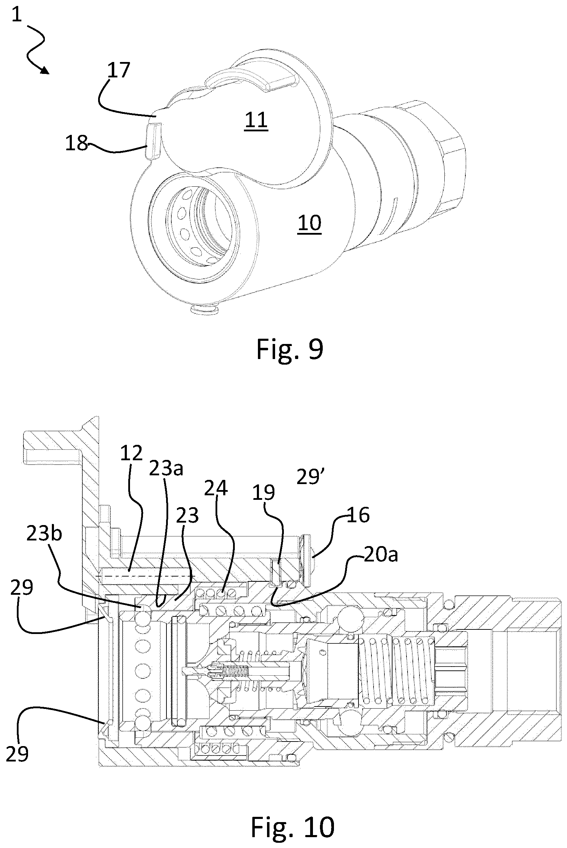

Said actuation means further includes an actuating pin **12** having a first end **12a** and a second end **12b.** The guide groove **13** receives the first end **12a** of the actuating pin **12,** while the second end **12b** of the actuating pin contacts the connection/disconnection ring nut **23.** Said actuating pin **12** is therefore movable between a first forward position, corresponding to a forward, rest position, of the connection/disconnection ring nut **23** of said female coupling **20,** and a second rearward position corresponding to a rearward position of said connection/disconnection ring nut **23,** which frees the radial movement of the connecting spheres **22,** which can be inserted into the seats **23b** formed on the inner face of the ring nut, facilitating the insertion of the male coupling **30.** The possibility of radial expansion of the connecting spheres **22** when the closing element **11** is open is visible in Figure 10.

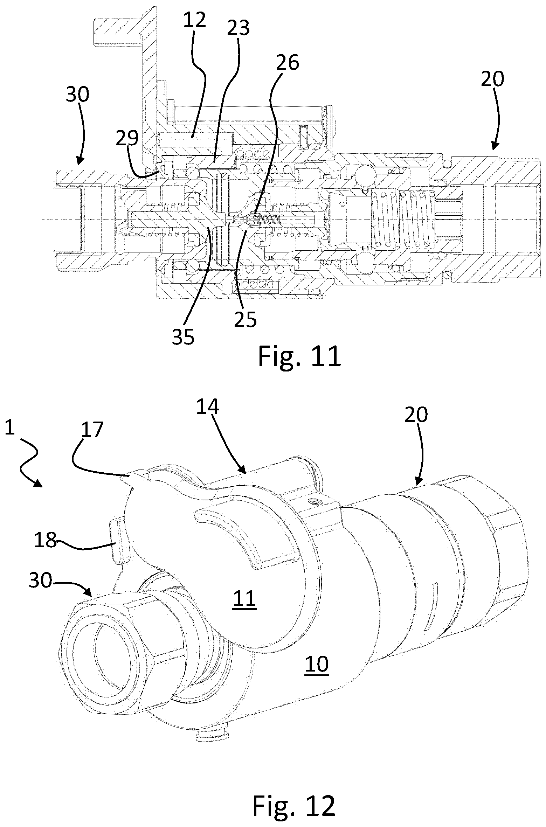

The following Figure 11 illustrates the insertion step of the male coupling **30** which therefore occurs unimpeded as the connecting spheres **22** are in a radially expanded position.

The closing device **1** according to the present invention therefore has the following operation.

When the closing element **11** of the device **1** is in the closing position in which it operates as a cap closing the front connection opening **21** of the coupling, the first end **12a** of said connection pin **12** is housed within said guide groove **13,** and said pin **12** is in said first forward position in which it does not push the connection/disconnection ring nut **23,** which is in the forward rest position in which, as described, said at least one protrusion **23a** provided on the inner face of the connection/disconnection ring nut **23** keeps the connection spheres **22** in their configuration radially protruding towards the inside of the coupling.

When the user acts on the grasping element **11c** of said closing element **11** by rotationally moving said closing element **11** from the closing position to the opening position, the first end **12a** of the connecting pin **12** is at said inclined plane **13'** of said groove **13.** The relative sliding of the end **12a** of the connecting pin **12** on the inclined plane **13',** following the rotational movement of the closing element **11** by the operator, causes the displacement in the rearward position of said connecting pin **12,** and the consequent retraction of the connection/disconnection ring nut **23** that radially frees the connecting spheres **22** facilitating the insertion of the male coupling **30** by the operator.

Advantageously, said closing element **11** of closing device **1** further comprises a protrusion or tooth **17** configured to abut against a corresponding abutment element **18** integral with said main body **10,** said protrusion **17** and said abutment **18** being mutually arranged so as to limit the rotational movement of opening of the closing element **11,** substantially constituting an end stroke that limits the opening rotation of the closing element **11.**

With particular reference to Figure 11, the closing device 1 according to the present invention, facilitating the insertion of the male coupling **30** in the female **20,** allows the insertion, without high efforts for the operator, of the male in the female and the direct contact of the axial valve bodies **25, 35** between them, with consequent actuation of the micro valve **26** which allows the decompression of any residual pressures present in the female coupling already in the connection step with the male, further facilitating the connection manoeuvre.

Once this first connection step has been carried out, thanks to the action of the torsional spring **15,** the closing element **11** returns partially towards the closing condition, but remaining resting on the male coupling **30,** according to what is visible in Figure 12.

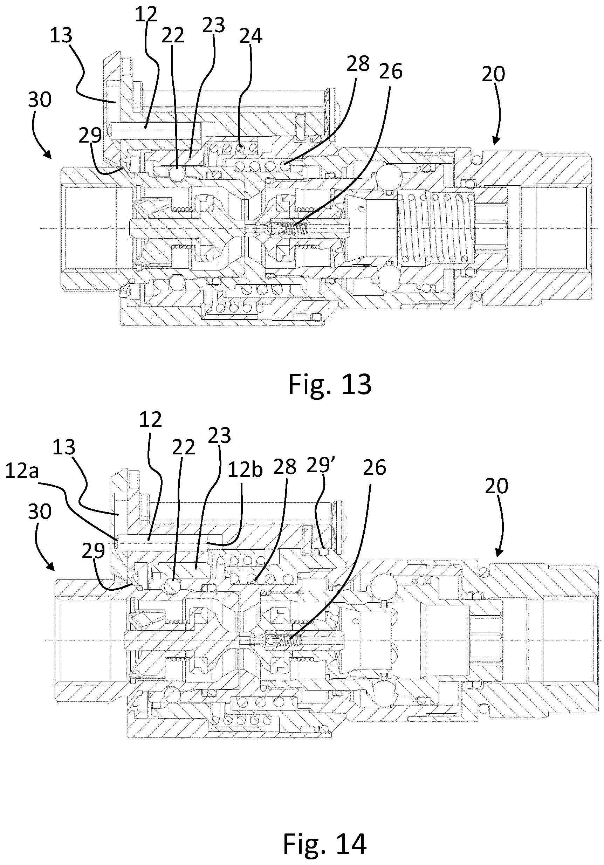

At this point, the operator has both hands free to be able to continue with the next connection step, shown in Figure 13, which highlights the compression of the micro-valve **26** that allows the displacement of the inner components of the female coupling. It is also noted that the connection/disconnection ring nut **23,** pushed by the spring **24,** was triggered locking the spheres **22** in the groove of the male coupling **30.** The pin **12** has returned to its initial position with the outermost part inserted into the groove **13.**

It is not illustrated here in detail how the displacement of the inner components of the female coupling takes place since the further connection steps are completely corresponding to those of the *push-pull* type couplings of known type.

With reference to Figure 14, it illustrates the male coupling **30** completely connected to the female coupling **20.** The inner components have returned to the position pushed by the spring **28,** and the oil passage is open. Advantageously, a front shaped gasket **29** is provided in the front portion of the female coupling, to prevent dirt from entering from the front area of the cap, and thus protect the described inner mechanism.

In addition, a further rear sealing gasket **29'** is preferably provided at the rear of the cap.

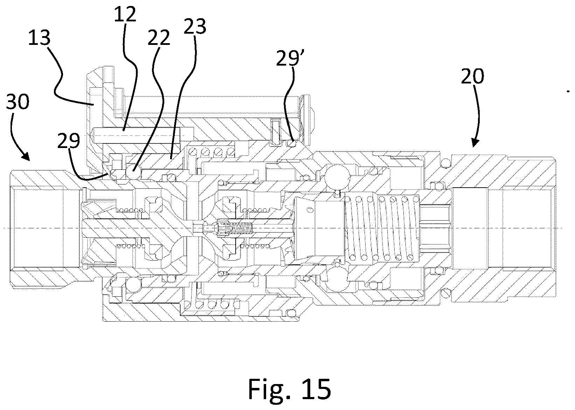

Finally, Figure 15 illustrates a disconnection step in which it can be noted how the connection/disconnection ring nut **23** is blocked in contact on the body **10** of the closing element. By pulling the male outwards (as normally happens in quick-release couplings of the *push-pull* type) the connecting spheres **22** can be displaced radially as they are at the seat **23b** formed on the inner face of the ring nut. The displacement of the spheres allows the male coupling **30** to disconnect.

At the end of this step the door is closed by the torsional spring **15.**

It has thus been shown how the improved closing device for quick-release couplings for fluids under pressure, in particular for quick-release couplings of the *push-pull* type, according to the present invention, fulfils the task as well as the intended purposes as it allows to facilitate the connection of the *push-pull* couplings, in particular the ¾ -inch couplings, reducing the necessary effort and improving operational efficiency.

A further advantage of the improved closing device for quick-release couplings according to the present invention consists in the possibility of providing a closing device adapted to preserve the female coupling from the entry of dirt and dust when the coupling is disconnected, and to collect the dirty oil that can escape from the female coupling during the connection and disconnection operations.

The improved closing device for quick-release couplings thus conceived is susceptible to numerous modifications and variants all falling within the scope of the inventive concept.

Furthermore, all the details can be replaced by other technically equivalent elements.

In practice, any materials can be used according to requirements, as long as they are compatible with the specific use, the dimensions and the contingent shapes.

## Claims

1. A closing device (1) for quick-release couplings (20, 30) for fluids under pressure, in particular for female couplings (20) of the push-pull type provided with an axially movable outer coupling ring nut (23) and a ring of connecting spheres (22), movable in a radial direction, for connection with a male coupling (30), said device comprising a main body (10) suitable for being associated with the outer body of said female coupling (20) at the connection opening (21) suitable for accepting said male coupling (30), and at least one closing element (11) movable with respect to said main body (10) between a first closing position in which, when said device (1) is associated with the female coupling (20), the closing element (11) closes the connection opening (21) of said female coupling (20), and a second opening position in which the closing element (11) leaves free access to the connection opening (21) of said female coupling (20), said closing device (1) further comprising actuation means (12, 13) suitable for selectively actuating in translation said connection/disconnection ring nut (23) of said female coupling when said closing element (11) is in said opening position, **characterized in that** said actuation means comprise at least one shaped guide groove (13), formed on said closing element (11), in turn comprising an end portion defining an inclined plane (13'), said actuation means further comprising an actuating pin (12) provided with a first end (12a) and with a second end (12b), said guide groove (13) being configured to receive said first end (12a) of said actuating pin (12) and said second end (12b) being capable of contacting, when the device (1) is assembled on said female coupling (20), said connection/disconnection ring nut (23) of said female coupling.

2. Closing device (1) according to the preceding claim, wherein said actuating pin (12) is movable between a first forward position corresponding to a forward rest position of the connection/disconnection ring nut (23) of said female coupling (20), and a second rearward position corresponding to a rearward position of said connection/disconnection ring nut (23) allowing coupling with the male coupling (30).

3. Closing device (1) according to the preceding claim, wherein when said first end (12a) of said connecting pin (12) is housed inside said guide groove (13), said pin is in said first forward position, while when said closing element (11) is rotated in its opening position, said first end (12a) of said connecting pin (12) is at said inclined plane (13') of said groove (13), said inclined plane (13') causing the displacement in the rearward position of said connecting pin (12) and the consequent retraction of the connection/disconnection ring nut (23).

4. Closing device (1) according to one or more of the preceding claims, wherein said closing element (11) further comprises hinging means (14) for rotationally movable connection of said closing element (11) with the main body (10) of the device (1).

5. Closing device (1) according to the preceding claim, wherein said hinging means (14) comprise at least one cylindrical connecting element (14a) rotatably connected to said closing element (11) and suitable for being inserted in a corresponding receiving opening (14b) formed in said main body (10) of said closing device (1), elastic means (15) acting between said cylindrical connecting element (14a) and said closing element (11), which is in turn stably connectable to said main body (10), so as to keep said closing element (11) in said first closing position.

6. Closing device (1) according to the preceding claim, wherein said elastic means acting between said cylindrical connecting element (14a) and said closing element (11) comprise a torsional spring (15).

7. Closing device (1) according to one or more of the preceding claims, **characterized in that** it further comprises fixing means (16) suitable for retaining said cylindrical connecting element (14a) within said receiving opening (14b) obtained in said main body (10).

8. Closing device (1) according to one or more of the preceding claims, **characterized in that** said closing element (11) comprises an outer face (11a), which is turned outwards when said device (1) is associated with the female coupling (20), and an inner face (11b), which is facing towards the female coupling (20) when the device (1) is associated with the female coupling (20), said cylindrical connecting element (14a) rotatably connected to said closing element (11) by projecting from said inner face (11b).

9. Closing device (1) according to one or more of the preceding claims, **characterized in that** it further comprises one or more threaded grub screws (19) for connecting the closing device (1) to the female coupling (20), a receiving groove being provided on the female coupling (20) so that the radial orientation of the closing device (1) with respect to the female coupling (20) can take place by loosening and closing said grub screws (19).

10. Female coupling (20) of the push-pull type comprising an axially movable outer connecting ring nut (23) and a ring of connecting spheres (22) movable in the radial direction for connection with a male coupling (30), said female coupling (20) further comprising a closing device (1) according to one or more of the preceding claims.
